# EUROPÄISCHE PATENTSCHRIFT

(11) **EP 0 477 628 B1**
(45) Veröffentlichungstag und Bekanntmachung des Hinweises auf die Patenterteilung: **29.03.1995**
(21) Anmeldenummer: 91115116.5
(22) Anmeldetag: 06.09.1991
(51) Int. Cl.: G06F 11/22, G06F 11/34

(54) **Kommunikationssystem mit einem der zentralen Steuerung dienenden Multiprozessorsystem, an das für Test-und Diagnosevorgänge ein Tracersystem anschliessbar ist**
Communication system with a central control using a multiprocessor system to which a tracer is connectable for test and diagnostic operations
Système de communication avec un système multiprocesseur à commande centralisée auquel un traceur est connectable pour des opérations de test et de diagnostic

(30) Priorität: 28.09.1990 DE 4030783
(43) Veröffentlichungstag der Anmeldung: 01.04.1992
(73) Patentinhaber: SIEMENS AKTIENGESELLSCHAFT, 80333 München (DE)
(72) Erfinder: Keller, Hans-Jörg, Dipl. Inform., W-8011 Putzbrunn (DE); Kuske, Horst, W-8000 München (DE); Zilbauer, Werner, Dipl.-Ing., W-8000 München (DE); Teller, Johannes, Dipl.-Ing., W-8000 München 70 (DE)

(56) Entgegenhaltungen:
- US-A- 4 636 940
- MICROPROCESSING AND MICROPROGRAMMING Bd. 10, Nr. 1, August 1982, AMSTERDAM NLSeiten 19 - 24 M. D. MANZO ET AL 'A Monitoring Distributed System'
- COMPUTER DESIGN Bd. 27, Nr. 21, November 1988, LITTLETON, MASSACHUSETTS USSeiten 29 - 35 , XP1809 B. MCCULLOGH 'Parallel Processing Systems DemandTailored Benchmarks'
- COMPUTER COMMUNICATIONS Bd. 9, Nr. 6, November 1986, GUILDFORD GB Seiten 282 -286 M. S. MADAN 'Performance Monitor for an Operational LAN'

## Beschreibung

Die Erfindung betrifft eine Einrichtung gemäß Oberbegriff des Patentanspruchs 1.

Aus der Entwicklung von immer komplexer werdenden Datenverarbeitungssystemen und Kommunikationssystemen ist die Forderung nach entsprechenden Test- und Diagnosemöglichkeiten erwachsen. So gibt es bereits eine Vielzahl von Test- und Diagnosesystemen, die eine Fehlerlokalisierung in derart komplexen Systemen erleichtern, und mit deren Hilfe umfangreiche Test- und Diagnosevorgänge, insbesondere auf der "untersten Bitebene" durchgeführt und aufgezeichnet werden können. Ein Beispiel für derartige Test-und Diagnosesysteme sind die sogenannten Tracersysteme. Sie können über spezielle Anschlußeinheiten an die zu testenden Einheiten eines komplexen Systems angeschlossen werden, wobei die in diesen Einheiten ablaufenden Vorgänge über diese speziellen Anschlußeinheiten zum Tracersystem geführt und dort mitprotokolliert und ausgewertet werden. Dabei wird das Mitprotokollieren zeitlich von speziellen Startbedingungen, die im Tracersystem einprogrammiert werden können, abhängig gemacht.

Solche üblichen Tracersysteme, wie z.B. die Tracersysteme der Firma Northwest Instrument Systems Inc., die in entsprechenden Firmenschriften detailliert beschrieben sind, sind an sich auch für die eingangs erwähnten komplexen Datenverarbeitungssysteme oder Kommunikationssysteme verwendbar. Problematisch bei allen kommerziellen Tracersystemen ist jedoch, daß ihre Schnittstellen sehr neutral gehalten und damit nicht systemspezifisch sind. Dies bedeutet, daß spezielle Test- und Diagnosebedürfnisse, wie sie z.B. beim Betrieb moderner Kommunikationssysteme bestehen, mit herkömmlichen Tracersystemen nicht - oder nur in beschränktem Umfang - befriedigt werden können.

So müssen z.B. beim Anschluß herkömmlicher Tracersysteme die zu untersuchenden Systeme abgeschaltet werden; dies ist aber gerade bei modernen Kommunikationssystemen unter allen Umständen zu vermeiden, da insbesondere hier extrem hohe Anforderungen bezüglich Ausfallsicherheit gestellt werden, um bestehende Verbindungen auch beim Auftreten von Fehlern weiterhin aufrechtzuerhalten. Aus diesem Grund sind die zentralen - und zum Teil auch periphere Teile eines Kommunikationssystem stets in gedoppelter Form ausgeführt, wobei eine Hälfte aktiv in das Prozeßgeschehen eingebunden, die andere Hälfte in "Wartestellung" geschaltet ist, um bei Ausfall der ersteren unmittelbar deren Aufgaben in vollem Umfang übernehmen zu können. Für zwei miteinander kommunizierende Teilnehmer ist das Auftreten von Fehlern im Kommunikationssystem sowie dessen unmittelbare Beseitigung daher nicht feststellbar. Durch die Doppelung wird also eine Erhöhung der Ausfallsicherheit des gesamten Kommunikationssystems erreicht. Das Abschalten einer sich in "Wartestellung" befindlichen Hälfte für die Zeit des Anschaltens eines herkömmlichen Tracersystems bedeutet aber, daß bei Ausfall der aktiv im Prozeßgeschehen eingebundenen Hälfte ein unmittelbares Umschalten auf eine Ersatzhälfte nicht mehr möglich ist. Dies kann dann je nach Art eines in der aktiven Hälfte auftretenden Fehlers unter Umständen eine Blockierung des gesamten Kommunikationssystems nach sich ziehen. Damit wird für die Zeit des Anschaltens eines herkömmlichen Tracersystems die Ausfallwahrscheinlichkeit drastisch erhöht.

Des weiteren sind herkömmliche Tracersysteme in ihrer Funktion auf ein alleiniges Mitprotokollieren von Informationen beschränkt. Moderne Multiprozessorsysteme erfordern aber, daß hin und wieder auch aktiv vom Tracersystem in das Prozessorgeschehen eingegriffen wird. Dies würde aber zusätzlichen Aufwand im Tracersystem bedeuten, da ein solches System detaillierte Informationen über die Prozessoreigenschaften des zu untersuchenden Prozessorsystems aufweisen müßte.

Besonders nachteilig erweist sich bei herkömmlichen Tracersystemen der Umstand, daß eine Kommunikation mit dem zu untersuchenden System nur auf der untersten Ebene (Bitebene) möglich ist. Dies bedeutet aber, daß der Anwender über die Bedeutung der im Tracersystem aufgezeichneten Bitmuster detaillierte Kenntnisse haben muß. Bei überschaubaren Systemen ist dies auch ohne weiteres möglich. So läßt sich beispielsweise, falls das Tracersystem an das Bussystem eines Mikroprozessors angeschlossen ist, der Ablauf eines in Assemblersprache codierten, überschaubaren Programmmoduls durchaus nachvollziehen. Dies ist bei komplexeren Systemen, wie sie Kommunikationssysteme darstellen, nicht mehr möglich. Die hier ablaufenden, meist in höheren Programmiersprachen codierten Prozeduren/Prozesse sind derart komplex in ihrem Zusammenwirken untereinander und umfangreich, daß der Anwender mit der Analyse der Bitmuster beispielsweise auf dem Systembus überfordert ist. Darüberhinaus erfordert dieses Zusammenwirken eine Koordinierung der einzelnen Prozeduren/Prozesse; damit sollen insbesondere gleichzeitige Zugriffe zweier oder mehrerer Prozeduren/Prozesse auf dasselbe Datenfeld vermieden werden. Nun ist es aber sehr schwierig im Fehlerfall - also bei gleichzeitigem Zugriff zweier oder mehrerer Prozeduren/Prozesse - die für den falschen Zugriff verantwortliche Prozedur zu lokalisieren. Tracersysteme der herkömmlichen Art können hier keine Abhilfe schaffen.

Ferner besteht insbesondere bei modernen Multiprozessorsystemen oft das Bedürfnis, dynamische Daten und Programme in einem Speichersystem zu testen. Dabei handelt es sich um Daten und Programme, die durch eine dynamische Zuweisung von Speicherplatz in einem Speichersystem abgelegt werden, d.h. die Zuweisung des entsprechenden Speicherbereichs erfolgt erst kurz vor dem Ladevorgang der Daten und Programme vom externen Speichermedium. Derartige Test- und Diagnosevorgänge sind mit Tracersystemen herkömmlicher Art nicht möglich.

Letztendlich besitzen heutige Kommuniktionssysteme vielfältige Prozeduren, die zu systeminternen Test- und Diagnosevorgängen von Daten, Adressen und Programmteilen nutzbar sind, zu denen herkömmliche Tracersysteme aber nicht oder nur bestenfalls unvollkommen zugreifen können.

Aus der US-Patentschrift US-A-4 636 940 ist weiterhin ein Tracersystem bekannt. Darin wird insbesondere angesprochen, wie symbolische Namen bei der Kommunikation zwischen Tracersystem und Kommunikationssystem definiert und verwendet werden können. Weiterhin ist das dort definierte Tracersystem lediglich als Logic Analyser ausgebildet, weswegen die oben angeführten Nachteile mit einer derartigen Anordnung auch nicht beseitigt werden können.

Der Erfindung liegt die Aufgabe zugrunde, ein Tracersystem auszugestalten, das die Kommunikation mehrerer Prozessoren in einem Multiprozessorsystem mitberücksichtigt und damit eine bessere und schnellere Diagnose von Fehlerquellen innerhalb des Multiprozessorsystems ermöglicht.

Diese Aufgabe wird ausgehend von dem im Oberbegriff des Patentanspruchs 1 definierten Kommunikationssystem erfindungsgemäß durch die im Kennzeichen des Patentanspruchs 1 genannten Merkmale gelöst.

Wesentlich für die Erfindung ist das aktive Eingreifen in das Prozessorgeschehen verbunden mit der Interkommunikation zwischen Prozessorsystem und Tracersystem, wobei das aktive Eingreifen vom Tracersystem mittels eines Interrupt-Befehls erfolgt. Dies bedeutet zwar für das zu untersuchende Prozessorsystem einen geringfügigen Dynamikverlust, jedoch ist dieser aufgrund der sich hieraus ergebenden Analysemöglichkeiten ohne weiteres zu tolerieren. Die Erfindung ermöglicht eine wesentlich schnellere Beseitigung aufgetretener Fehler und liefert damit einen Beitrag zur Erhöhung der Ausfallsicherheit der gesamten Anlage. Da der Durchschaltung und Weiterleitung von Datenströmen in einem Kommunikationssystem eine immer größere Bedeutung zukommt, stellt dieser Umstand einen Faktor von besonderer Wichtigkeit dar.

Gemäß einer vorteilhaftgen Weiterbildung der Erfindung erfolgt die Anschaltung des Tracersystems ohne Adapter. Des weiteren werden zusätzliche Schnittstellen zu den Tabellen/Listen des Kommunikationssystems bereitgestellt. Dabei handelt es sich um Tabellen/Listen des Betriebssystems sowie die Tabellen/Listen, die im Rahmen der Bindevorgänge der Support Software entstehen. Die Support Software läuft auf einem externen Computersystem - im folgenden Hostrechner genannt - ab. Sie beinhaltet alle Prozeduren, die die Erstellung der Prozeduren des Kommunikationssystems ermöglichen, wie z.B. Assembler/Compilerprozeduren oder die Prozeduren des Binders.

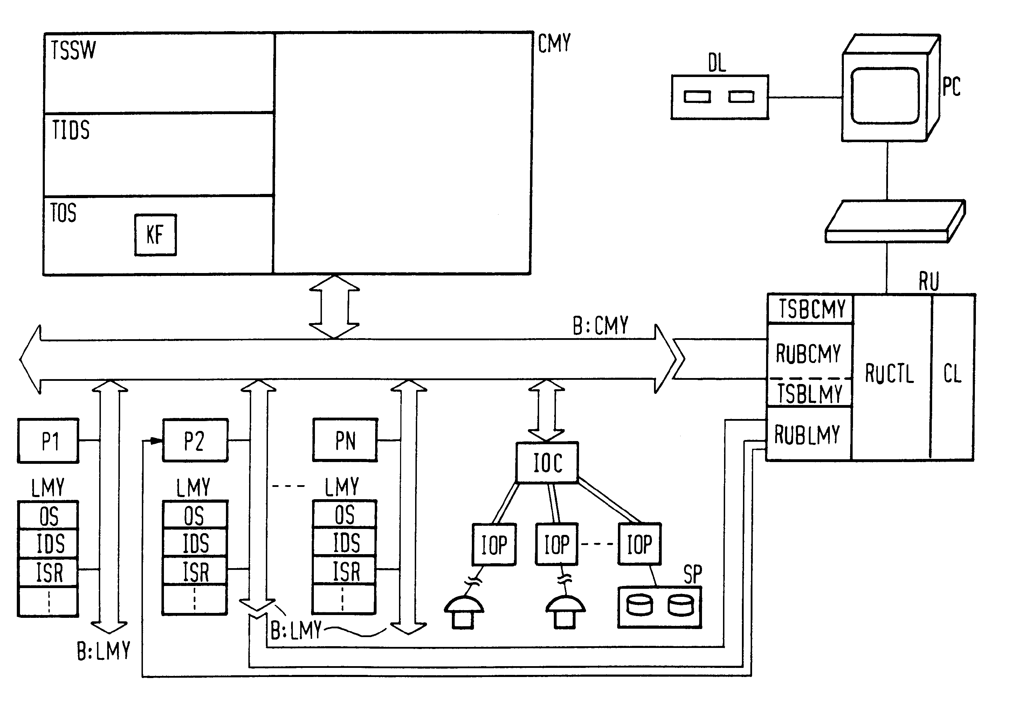

Die Erfindung wird anhand eines Ausführungsbeispiels näher erläutert. FIG 1 zeigt ein modular srukturiertes Multiprozessorsystem, das dezentrale Prozessoreinheiten eines Kommunikationssystems koordiniert.

Das Multiprozessorsystem besteht aus
- einem zentralen Systembus B:CMY, an dem jeweils mehrere Prozessoren P₁...Pₙ und die ihnen jeweils zugeordneten lokalen Speichersysteme LMY über jeweils einen lokalen Bus B:LMY angeschlossen sind,
- ebenfalls mit dem zentralen Systembus B:CMY über Steuer- und Überwachungseinheiten IOC verbundenen Input/Output-Prozessoren IOP,
- sowie einem ebenfalls mit dem zentralen Systembus B:CMY verbundenen, für alle Einheiten des Multiprozessorsystems gemeinsamen Speichersystem CMY.

In den lokalen Speichersystemen LMY sind unter anderem die Prozeduren des Betriebssystems OS des Multiprozessorsystems, der systeminternen Test und -Diagnose IDS sowie Prozeduren, die vom Tracersystem über Interruptbefehl mitverwendet werden - im folgenden Interrupt Service Routine ISR genannt - abgelegt. Das gemeinsame Speichersystem CMY enthält alle Tabellen und Listen, auf die die obengenannten Prozeduren zugreifen, die für die Vermittlungstechnik relevanten Daten sowie Prozeduren, die von einem externen Speichersystem SP nachgeladen werden. Die Interrupt Service Routinen ISR sind speziell für den Anschluß eines Tracersystems in den lokalen Speichersystemen LMY abgelegt. Sie steuern die Kommunikation zwischen Multiprozessorsystem und Tracersystem: So können sie zum einen auf die im gemeinsamen Speichersystem CMY abgelegten Tabellen und Listen der Support Software TSSW, des Betriebssystems TOS zugreifen und intern ablaufende Test- und Diagnoseprozeduren IDS anstoßen, und zum anderen die internen Abläufe der Prozessoren beeinflussen; hierzu gehören z. B. das Ein-/Ausschalten der CACHE-Speicher und der Schreibzyklusverlängerung, worauf an anderer Stelle noch näher eingegangen wird.

An das Multiprozessorsystem wird zu Test- und Diagnosezwecken das erfindungsgemäße Tracersystem angeschlossen. Das Tracersystem selbst ist aus einem Tischrechner PC - bestehend aus einem Datensichtgerät mit Tastatur und einem externen Speichermedium (Floppy Disk) - sowie einer Aufzeichnungseinheit RU aufgebaut. Die Aufzeichnungseinheit RU besteht aus einem zentralen Steuerteil RUCTL, busindividuellen Teilen RUBCMY und RUBLMY, dazugehörigen Tracespeichern TSBCMY und TSBLMY sowie einer mit der Multiprozessorzeit synchronisierbaren Uhr CL.

Alle Bussysteme B:CMY, B:LMY des Prozessorsystems bestehen aus Adreßleitungen, Datenleitungen und Steuerleitungen. Die für das Tracersystem vorgesehenen Anschlußeinheiten sind in den entsprechenden busindividuellen Teilen RUBCMY, RUBLMY der Aufzeichnungseinheit RU implementiert. Ferner erfolgt der aktive Eingriff des Tracersystems mittels Interrupt-Befehlen über einen gesonderten Anschluß an den Prozessoren P₁ ...Pₙ selbst. Da alle Abläufe eines Multiprozessorsystems entweder über die lokalen Systembusse B:LMY oder das zentrale Bussystem B:CMY erfolgen, erlaubt eine derart ausgestaltete Konfiguration einen detaillierten "Einblick" in die internen Abläufe.

Der Anschluß des Tracersystems an das Multiprozessorsystem erfolgt am zentralen Bussystem B:CMY und wahlweise an einem der lokalen Bussysteme B:LMY; dabei wird das Tracersystem an spezielle, im Multiprozessorsystem zu diesem Zweck implementierte Entkoppelungsgatter angeschaltet. Damit ist ein Anschalten während des laufenden Betriebes des Multiprozessorsystems gewährleistet. Nach erfolgtem Anschluß setzt das Tracersystem automatisch einen Interrupt-Befehl auf den zu diagnostizierenden Prozessor Px ab. Der Interrupt-Befehl selbst besteht aus einem speziellen Bitmuster und stellt damit für den Prozessor Px ein entsprechendes Kriterium für die Verzweigung zu den im lokalen Speichersystem LMY abgelegten Interrupt Service Routinen ISR dar. Im speziellen Fall - also unmittelbar nach Anschluß des Tracersystems an das Multiprozessorsystem - wird die Uhr CL des Tracersystems mit derjenigen des Multiprozessorsystems synchronisiert, sowie die unterschiedlichen Entwicklungsschritten der Prozeduren des Kommunikationssystems zugeordnete Versionsnummer überprüft, worauf an anderer Stelle noch näher eingegangen wird.

Der Anwender kann mit einem Interrupt-Befehl auch aktiv in das Prozessorgeschehen eingreifen. Insbesondere bei komplexen Test- und Diagnosevorgängen entsteht oft das Bedürfnis, von außen den Prozessorablauf zu beeinflussen. Dabei wird der am Tracersystem durch ein spezielles Bitmuster einstellbare Interrupt-Befehl direkt auf einen zu diesem Zweck am Prozessor Px vorgesehenen Eingang gegeben. Der Prozessor Px wertet das Bitmuster aus und verzweigt dementsprechend zu der im lokalen Speichersystem LMY abgelegten Interrupt Service Routine ISR. Diese greifen - wie schon erwähnt - auf die im gemeinsamen Speichersystem CMY abgelegten Tabellen und Listen zu. Da der Zugriff über das gemeinsame Bussystem B:CMY erfolgt, können die entsprechenden Adressierungs- und Ladevorgänge detailliert am Tracersystem mitprotokolliert werden. Aus diesem Grund ist auch ein Kommunikationsfeld KF im gemeinsamen Speichersystem CMY abgelegt, da der durch die jeweilige Interrupt Service Routine ISR gesteuerte Prozessor Px dort interne Daten (wie z. B. den Programmzählerstand) abspeichert.

Eine derartige externe Eingriffsmöglichkeit in den Prozessorablauf ist insbesondere dort vorteilhaft, wo Daten in unzulässiger Weise verfälscht werden. Ein in diesem Fall erfolgtes Mitprotokollieren durch die Betriebsart "Datentrace", wie sie ein Tracersystem der herkömmlichen Art durchführen würde, würde zwar den Verfälschungsvorgang der Daten in einer Speicherzelle aufzeichnen, jedoch nicht den dafür verantwortlichen Programmcode. Dieser ist aber bei einer Fehleranalyse von besonderem Interesse. Das Absetzen eines Interrupt-Befehls erleichtert das Auffinden des für die Verfälschung der Daten verantwortlichen Programmcodes. Dabei wird die Adresse der Speicherzelle, in der die Verfälschung von Daten aufgrund eines fehlerhaften Zugriffs erfolgt ist, im Tracersystem eingespeichert. Bei Adressierung dieser Speicherzelle durch den einen der Prozessoren P₁...Pₙ erfolgt umgehend ein Interrupt vom Tracersystem auf den Interrupteingang des für diesen Zugriff verantwortlichen Prozessors Px. Dieser wird durch die entsprechende Interrupt Service Routine ISR dazu veranlaßt, unmittelbar seinen Programmzählerstand in das Kommunikationsfeld KF im gemeinsamen Speichersystem CMY abzulegen. Dieser Vorgang wird vom Tracersystem mitprotokolliert. Die Auswertung des Programmzählerstandes erlaubt konkrete Rückschlüsse darüber, welche Prozedur zugegriffen hat und ob der entsprechende Zugriff auf die Speicherzelle auch berechtigt oder unberechtigt war. Problematisch ist dabei allerdings, daß der im gemeinsamen Speichersystem CMY abgelegte Programmzählerstand nicht mehr unmittelbar dem Programmcode zuzuordnen ist, der für das Einschreiben der Daten in die entsprechende Speicherzelle verantwortlich war. Dies liegt daran, daß zeitgemäße Mikroprozessoren im Gegensatz zu Mikroprozessoren älterer Bauart einen Block von mehreren Befehlen aus dem lokalen Speichersystem LMY in mikroprozessorinterne Register laden. Hier werden dann diese Befehle erheblich schneller abgearbeitet, da sie andernfalls einzeln über das lokale Bussystem B:LMY geladen werden müssen. Im speziellen Fall bedeutet dies aber, daß von dem Zeitpunkt an, in dem die interessierende Datenzelle adressiert wurde, bis zu dem Zeitpunkt, zu dem der Mikroprozessor durch den externen Interruptbefehl angehalten wurde, eine gewisse Zeit verstrichen ist, in der der Mikroprozessor bereits weitere Befehle des Befehlsblocks abgearbeitet hat, ohne einen neuen Befehlsblock über das lokale Bussystem B:LMY nachgeladen zu haben. Er ist somit von dem Programmcode, der für den fehlerhaften Zugriff und die damit einhergehende Verfälschung der Daten verantwortlich war, mehrere Befehle weitergelaufen, und speichert, nachdem der Interrupt-Befehl eingetroffen ist, den Programmzählerstand des letzten, zur Ausführung gelangten Befehl des Prozessors Px im Kommunikationsfeld KF ab. Dieser ist aber nicht mehr mit dem Programmzählerstand des Befehls identisch, der für den fehlerhaften Zugriff verantwortlich war. Je mehr Befehle der Prozessor Px aber nach dem fehlerhaften Zugriff bis zum Eintreffen des Interrupt-Befehls bearbeitet hat, um so schwieriger gestaltet sich das Auffinden des für diesen Zugriff verantwortlichen Programmcodes, es entsteht somit eine gewisse Unschärfe, die es einzugrenzen gilt. Um dieses Vorauseilen des Prozessors Px zu vermeiden, und damit einhergehend eine zu große Unschärfe des Programmzählerstandes zu verhindern, ist eine Schreibzyklusverlängerung zum Systembus B:CMY realisiert. Sie bewirkt, daß bei Schreibzyklen in das gemeinsame Speichersystem CMY solange keine weiteren Befehle im Prozessor Px abgearbeitet werden können, bis der Schreibzyklus am Systembus B:CMY beendet ist. Damit weist der Programmzählerstand nur noch eine geringe Unschärfe auf. Die Schreibzyklusverlängerung kann über einen entsprechenden Interrupt-Befehl und eine ihm zugeordnete Interrupt Service Routine ISR ein- und ausgeschaltet werden; sie wird sinnvollerweise nur dann verwendet, wenn ein fehlerhafter Zugriff auf eine Speicherzelle untersucht werden soll. Der hiermit einhergehende geringfügige Dynamikverlust kann ohne weiteres toleriert werden.

Folgende Betriebsarten sind im Tracersystem darüberhinaus programmierbar:
- Ablauftrace
- Datentrace/Datenmustertrace

Beim Ablauftrace wird der Code eines Prozessors P₁ ...Pₙ aufgezeichnet, wobei es sich um residente oder nicht residente Prozeduren handeln kann. Hierbei werden alle Codeadressen und der zugehörende Maschinencode eines Prozessors in der Reihenfolge des "Befehlsziehens" aus dem Speicher LMY, CMY aufgezeichnet. Der Abgriff der Aufzeichnungsdaten erfolgt am B:LMY.

Zeitgemäße Mikroprozessoren sind mit einem sogenannten CACHE-Speicher ausgestattet. Dies bedeutet, daß der Prozessor intern die letzten Befehle - je nach Art des Befehls und der Struktur des Prozessors können dies bis zu 100 Befehle sein - abspeichert, und z. B. beim Durchlaufen einer Schleife aus Geschwindigkeitsgründen auf diese intern abgelegten, für die Dauer der Schleife periodisch ablaufenden Befehle zugreift, ohne weitere Befehle aus dem lokalen Speichersystem LMY über das lokale Bussystem B:LMY zu ziehen. Ein direktes Eingreifen in derartige interne Prozessorabläufe ist von einem Tracersystem nicht möglich. Um diese dennoch mitprotokollieren zu können, wird der CACHE-Speicher vom Tracersystem über das Absetzen eines Interrupt-Befehls ausgeschaltet.

Der Datentrace ist im Gegensatz zum Ablauftrace nicht auf den Codebereich des Speichers, sondern auf den Datenbereich konzentriert. Durch die Aufteilung des Speichersystems in LMY und CMY ergeben sich die beiden Varianten "Datentrace am B:LMY", "Datentrace am B:CMY".

Eine spezielle Form des Datentrace ist der Datenuntertrace. Hier wird das Tracersystem mit einem speziellen Datenmuster programmiert. Erscheint dieses Datenmuster auf dem Systembus (B:CMY/B:LMY), so ist damit die Tracebedingung erreicht und der Aufzeichnungsvorgang beginnt. Der Datenmustertrace wird bevorzugt als Startkriterium für das Aufsuchen fehlerhaft zugreifender Prozeduren verwendet.

Des weiteren besitzt das erfindungsgemäße Tracersystem die Möglichkeit, die im Multiprozessorsystem residente Tabellen und Listen des Betriebssystems TOS, der Support-Software TSSW mitzubenutzen sowie die systeminternen Test- und Diagnoseprozeduren IDS anzustoßen. Zur Supportsoftware gehören unter anderem die Compiler/Assembler-Prozeduren sowie die Prozeduren des Binders. Sie enthalten die Zuordnung von symbolischen Namen für Prozeduren, Prozesse, Module zu den entsprechenden physikalischen Adressen des Multiprozessorsystems. Diese Zuordnung ist in Tabellenform abgelegt. Wenn also beispielsweise im Multiprozessorsystem eine Prozedur CHAOS aufgerufen wird, ist dem Multiprozessorsystem aufgrund dieser Tabellen die exakte physikalische Anfangsadresse der besagten Prozedur bekannt, und es findet eine entsprechende Verzweigung zu dieser physikalischen Adresse statt. Diese Tabellen werden mit einem externen Hostrechner erstellt, und auf die Disketten des Tracersystems übertragen. Damit besitzt das Tracersystem dieselben Zuordnungstabellen wie das Kommunikationssystem selbst und kann somit über die Verwendung symbolischer Begriffe eingestellt und ausgewertet werden; dies bedeutet, daß eine Kommunikation zwischen beiden Systemen auf symbolischer Ebene möglich ist. Im obigen Beispiel bedeutet dies, daß vom Tracersystem die Codeabläufe der Prozedur CHAOS mitprotokolliert werden können, indem als Startkriterium in das Tracersystem der Name CHAOS anstelle der entsprechenden physikalischen Adresse einprogrammiert wird.

Das Erstellen der Prozeduren eines Kommunikationssystems impliziert mehrere, komplexe Entwicklungsschritte, da zum einen die Prozedur selbst unmittelbar nach dem Codierungsprozeß noch mit Fehlern behaftet ist, die erst nach weiteren Entwicklungsschritten beseitigt werden und zum anderen weitere Leistungsmerkmale hinzugefügt werden, was ein Einbinden weiterer Prozeduren in die Software des Kommunikationssystems bedeutet. Aus organisatorischen Gründen wird daher jedem Entwicklungsschritt eine Versionsnummer zugeteilt. Die symbolischen Namen innerhalb einer Prozedur können sich somit beim Durchlaufen verschiedener Entwicklungsschritte zum Teil erheblich verändert haben. Wenn aber über das erfindungsgemäße Tracersystem ein Dialog auf symbolischer Ebene mit dem Multiprozessorsystem möglich sein soll, muß das Tracersystem stets den aktuellen Stand der Zuordnung von symbolischen Daten zu physikalischen Adressen in seinen Tabellen und Listen enthalten. Dies geschieht unmittelbar nach Anschalten des Tracersystems durch ein automatisches Überprüfen der Versionsnummer der im gemeinsamen Speichersystem CMY des Multiprozessorsystems residenten Tabellen und Listen mit der entsprechenden Versionsnummer der sich auf dem externen Speichermedium DL des Tracersystems befindlichen Tabellen und Listen. Das Überprüfen erfolgt durch denselben Interrupt-Befehl, der auch die Uhrzeit des Tracersystems synchronisiert. Bei Übereinstimmung beider Versionsnummern ist ein Dialog auf symbolischer Ebene in vollem Umfang möglich; andernfalls findet ein Nachladen der wesentlichen Tabellen und Listen statt.

Wie bereits an anderer Stelle erwähnt, besitzt das Tracersystem im Rahmen der Erfindung eine Verbindung zu den im Multiprozessorsystem residenten Prozeduren der systeminternen Test und -Diagnose IDS, indem der Anwender unter Benutzung derselben einen Haltepunkt auf eine der Interrupt Service Routinen ISR setzt. Damit wird eine Ergänzung des Leistungsmerkmals des Tracersystems erreicht.

## Patentansprüche

1. Kommunikationssystem mit über Anschlußbaugruppen angeschlossenen Endgeräten sowie einem der Durchschaltung von Verbindungen dienenden Koppelfeld und einem der zentralen Steuerung dienenden Multiprozessorsystem, bestehend
- aus einem zentralen Systembus (B:CMY), an dem jeweils mehrere Prozessoren (P1 ... Pn) und die ihnen jeweils zugeordneten lokalen Speichersysteme (LMY) über jeweils einen lokalen Bus (B:LMY) angeschlossen sind,
- aus ebenfalls mit dem zentralen Systembus (B:CMY) über Steuer- und Überwachungseinheiten (IOC) verbundenen Input/Output-Prozessoren (IOP)
- und aus einem ebenfalls mit dem zentralen Systembus (B:CMY) verbundenen für alle Einheiten des Multiprozessorsystems gemeinsamen Speichersystem (CMY)
und mit einem Tracersystem, das am zentralen Systembus (B:CMY) und einem der lokalen Bussysteme über wenigstens eine Schnittstelle anschließbar ist,
**dadurch gekennzeichnet**,
daß das aus einem Tisch-Rechner (PC) mit externem Speichermedium (DL) sowie einer Aufzeichnungseinheit (RU) bestehende Tracersystem die Struktur des Multiprozessorsystems bei Test- und Diagnosevorgängen derart mit einbezieht, daß
- wenigstens ein 'Interrupt'-Befehl vom Tracersystem zu einem der Prozessoren (P1 ... Pn) unter Berücksichtigung der speziellen Hardware Eigenschaften derselben abgesetzt wird,
- die Synchronisierung einer Uhr des Tracersystems durch eine Systemuhr des Multiprozessorsystems erfolgt, und
- daß wenigstens eine Schnittstelle zu Tabellen und Listen des Multiprozessorsystems implementiert ist, wobei dann das Tracersystem über die Schnittstelle, im Multiprozessorsystem residente Tracerprozeduren, die Zugriff auf Tabellen des Betriebssystems (OS) des Multiprozessorsystems haben, mitbenutzt, so daß
-- ein Dialog zwischen dem Tracersystem und dem Multiprozessorsystem unter Verwendung symbolischer Namen für Prozeduren, Prozesse, Daten und Adressen durchführbar ist und
-- im Multiprozessorsystem residente, systemintern ablaufende Test- und Diagnoseprozeduren vom Tracersystem angestoßen werden.

2. Kommunikationssystem nach Anspruch 1,
**dadurch gekennzeichnet**,
daß die Anschaltung des Tracersystems an das Multiprozessorsystem während des laufenden Betriebs desselben über im Multiprozessorsystem implementierte Entkopplungsgatter erfolgt.

3. Kommunikationssystem nach Anspruch 1,
**dadurch gekennzeichnet**,
daß das Tracersystem über die Schnittstelle Zugang zu den Prozeduren und Tabellen der Support Software hat.

4. Kommunikationssystem nach Anspruch 1 oder 3,
**dadurch gekennzeichnet**,
daß die im Multiprozessorsystem enthaltenen Tabellen, die eine Zuweisung physikalischer Adressen zu symbolischen Namen beinhalten, auch im externen Speichermedium (DL) des Tracersystems abgespeichert werden.

5. Kommunikationssystem nach Anspruch 4,
**dadurch gekennzeichnet**,
daß im Falle einer Abweichung der Tabelleninhalte des Tracersystems von denen des Multiprozessorsystems ein Nachladen über die Aufzeichnungseinheit (RU) auf das externe Speichermedium (DL) erfolgt.

6. Kommunikationssystem nach einem der Ansprüche 1 bis 5,
**dadurch gekennzeichnet**,
daß nichtresidente Prozeduren und Daten, deren Adreßbereich vor einem Ladevorgang noch nicht feststeht und erst beim Ladevorgang dynamisch zugewiesen wird, vom Tracersystem mitprotokolliert werden können.

7. Kommunikationssystem nach einem der Ansprüche 1 bis 6,
**dadurch gekennzeichnet**,
daß auf den einzelnen Prozessoren ablaufende Prozeduren und Prozesse diagnostiziert werden.

## Claims

1. Communication system having terminals connected via line/trunk modules as well as a switching network serving to switch through connections and a multiprocessor system serving for central control, comprising
- a central system bus (B:CMY) to which in each case a plurality of processors (P1 ... Pn) and their respective assigned local memory systems (LMY) are connected via a local bus (B:LMY) in each case,
- input/output processors (IOP) likewise connected to the central system bus (B:CMY) via control and monitoring units (IOC),
- and a memory system (CMY) shared by all units of the multiprocessor system and likewise connected to the central system bus (B:CMY),
and having a tracer system which can be connected to the central system bus (B:CMY) and one of the local bus systems via at least one interface, characterized in that the tracer system comprising a desktop computer (PC) with external storage medium (DL) and also a recording unit (RU) includes the structure of the microprocessor system during test and diagnostic operations in such a way that
- at least one 'interrupt' instruction is issued by the tracer system to one of the processors (P1 ... Pn), taking account of the specific hardware features of the latter,
- a clock of the tracer system is synchronized by a system clock of the multiprocessor system, and
- at least one interface to tables and lists of the multiprocessor system is implemented, whereby, via the interface, the tracer system then also utilizes trace procedures which are resident in the multiprocessor system and have access to tables of the operating system (OS) of the multiprocessor system, so that
-- a dialog can be conducted between the tracer system and the multiprocessor system using symbolic names for procedures, processes, data and addresses, and
-- test and diagnostic procedures that are resident in the multiprocessor system and are executed system-internally are invoked by the tracer system.

2. Communication system according to Claim 1, characterized in that the tracer system is connected to the multiprocessor system while the latter is running by means of decoupling gates implemented in the microprocessor system.

3. Communication system according to Claim 1, characterized in that the tracer system has access to the procedures and tables of the support software via the interface.

4. Communication system according to Claim 1 or 3, characterized in that the tables present in the microprocessor system, which contain an assignment of physical addresses to symbolic names, are also stored in the external storage medium (DL) of the tracer system.

5. Communication system according to Claim 4, characterized in that in the case where the table contents of the tracer system deviate from those of the multiprocessor system, they are reloaded onto the external storage medium (DL) via the recording unit (RU).

6. Communication system according to one of Claims 1 to 5, characterized in that non-resident procedures and data whose address range is not yet established before a load operation and will only be assigned dynamically during the load operation can be co-logged by the tracer system.

7. Communication system according to one of Claims 1 to 6, characterized in that diagnostics are carried out on procedures and processes running on the individual processors.

## Revendications

1. Système de communication comportant des terminaux raccordés par l'intermédiaire de modules de raccordement, ainsi qu'un réseau de connexion utilisé pour l'interconnexion de liaisons, et un système multiprocesseur utilisé pour la commande centrale, et constitué
- par un bus central (B:CMY) du système, auquel sont raccordés respectivement plusieurs processeur (P1...Pn) et les systèmes de mémoire locaux (LMY), qui leur sont associés, par l'intermédiaire respectivement d'un bus local (B:LMY),
- par des processeurs d'entrée/sortie (IOP) reliés également au bus central (B:CMY) du système par l'intermédiaire d'unités de commande et de contrôle (IOC), et
- par un système de mémoire (CMY) relié également au bus central (B:CMY) du système et commun à toutes les unités du système multiprocesseur, et
un système d'analyse, qui peut être raccordé au bus central (B:CMY) du système et à l'un des systèmes de bus locaux, par l'intermédiaire d'au moins une interface,
caractérisé par le fait
que le système d'analyse, qui est constitué d'un ordinateur de bureau (PC) comportant un moyen extérieur de mémorisation (DL) ainsi qu'une unité d'enregistrement (RU), inclut conjointement la structure du système multiprocesseur dans des processus de test de diagnostic, de telle sorte que
- au moins une instruction "Interrupt" est délivrée par le système d'analyse à l'un des processeurs (P1...Pn) en tenant compte de leurs caractéristiques particulières de matériel,
- la synchronisation d'une horloge du système d'analyse est exécutée par une horloge du système multiprocesseur, et
- au moins une interface de liaison à des tableaux et à des listes du système multiprocesseur est réalisée, le système à programme d'analyse utilisant conjointement, par l'intermédiaire de l'interface, les procédures du système d'analyse, qui résident dans le système multiprocesseur et qui ont accès à des tableaux du système d'exploitation (OS) du système multiprocesseur, de sorte que,
-- un dialogue peut s'effectuer entre le système d'analyse et le système multiprocesseur moyennant l'utilisation de noms symboliques pour des procédures, des processus, des données et des adresses, et
-- des procédures de test et de diagnostic, qui résident dans le système multiprocesseur et sont exécutées à l'intérieur du système, sont déclenchées par le système d'analyse.

2. Système de communication suivant la revendication 1, caractérisé par le fait que le raccordement du système d'analyse au système multiprocesseur s'effectue pendant le fonctionnement en cours de ce système, par l'intermédiaire de portes de découplage formées dans le système multiprocesseur.

3. Système de communication suivant la revendication 1, caractérisé par le fait que le système d'analyse a accès, par l'intermédiaire de l'interface, aux procédures et tableaux du logiciel de support.

4. Système de communication suivant la revendication 1 ou 3, caractérisé par le fait que les tableaux, qui sont contenus dans le système multiprocesseur et qui contiennent une affectation d'adresses physiques à des noms symboliques, sont également mémorisés dans le moyen de mémorisation externe (DL) du système d'analyse.

5. Système de communication suivant la revendication 4, caractérisé par le fait que dans le cas d'une différence entre les contenus des tableaux du système d'analyse et ceux du système multiprocesseur, il se produit un chargement complémentaire dans le moyen de mémorisation externe (DL) par l'intermédiaire de l'unité d'enregistrement (RU).

6. Système de communication suivant l'une des revendications 1 à 5, caractérisé par le fait que des procédures et des données non résidantes, dont la zone d'adresses n'est pas encore fixée avant un processus de charge, et n'est affectée de façon dynamique que lors du processus de charge, peuvent être listées conjointement par le système d'analyse.

7. Système de communication suivant l'une des revendications 1 à 6, caractérisé par le fait que des procédures et des processus, qui se déroulent dans les différents processeurs, sont diagnostiqués.
